Europäisches Patentamt

European Patent Office

Office européen des brevets

(19)

(11) Veröffentlichungsnummer: **0 262 349 B1**

# (12) EUROPÄISCHE PATENTSCHRIFT

(45) Veröffentlichungstag der Patentschrift: **19.02.92**

(51) Int. Cl.⁵: **G01D 5/38**, G01B 11/26

(21) Anmeldenummer: **87111500.2**

(22) Anmeldetag: **08.08.87**

(54) **Lichtelektrische Winkelmesseinrichtung.**

(30) Priorität: **02.10.86 DE 3633574**

(43) Veröffentlichungstag der Anmeldung:
**06.04.88 Patentblatt 88/14**

(45) Bekanntmachung des Hinweises auf die
Patenterteilung:
**19.02.92 Patentblatt 92/08**

(84) Benannte Vertragsstaaten:
**DE FR GB IT**

(56) Entgegenhaltungen:
**BE-A- 744 278**
**FR-A- 2 412 822**
**US-A- 3 756 723**

**PATENT ABSTRACTS OF JAPAN Band 10, Nr.
229 (P-485)(2285), 8. August 1986; & JP-
A-61065115**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Spies, Alfons, Dipl.-Ing.
Wopfnerstrasse 2
W-8221 Seebruck(DE)**

## Beschreibung

Die Erfindung betrifft eine lichtelektrische Winkelmeßeinrichtung gemäß dem Oberbegriff der Ansprüche 1 bis 3.

Derartige Winkelmeßeinrichtungen werden insbesondere bei Bearbeitungsmaschinen zur Messung der Relativlage eines Werkzeugs bezüglich eines zu bearbeitenden Werkstücks eingesetzt.

In der Dissertation "Photoelektrische Messung der Änderung von Längen oder Winkelpositionen mit Hilfe von Beugungsgittern" von F. Hock, 1975, ist in Abb. 86 eine Winkelmeßeinrichtung zur Eliminierung des Exzentrizitätsfehlers der Winkelteilung einer Teilscheibe beschrieben, bei der der Lichtstrahl einer Lichtquelle über einen Kondensor einen ersten Winkelteilungsbereich der Winkelteilung der Teilscheibe durchsetzt und über ein erstes Pentaprisma, ein erstes Umlenkprisma und ein erstes Objektiv einem Wollastonprisma zur Aufspaltung in zwei Teilstrahlen zugeführt wird. Die beiden Teilstrahlen durchsetzen über ein zweites Objekt, ein zweites Pentaprisma und ein zweites Umlenkprisma einen dem ersten Winkelteilungsbereich diametral gegenüberliegenden zweiten Winkelteilungsbereich der Winkelteilung der Teilscheibe und beaufschlagen über ein polarisierendes Teilerprisma zwei Photoempfänger. Diese Winkelmeßeinrichtung besitzt wegen der Vielzahl der optischen Elemente große Abmessungen und bedarf eines größeren Montage- und Justageaufwandes.

In der Druckschrift "Motion" Juli/August 1986 ist im Aufsatz "Laser Rotary Encoder" von Nishimura et al. auf den Seiten 3 und 4 eine Winkelmeßeinrichtung zur Eliminierung des Exzentrizitätsfehlers der Winkelteilung einer Teilscheibe angegeben, bei der der Lichtstrahl einer Laserdiode durch ein polarisierendes Teilerprisma in zwei Teilstrahlen aufgespalten wird. Der erste Teilstrahl durchsetzt über eine erste Phasenplatte und einen ersten Spiegel einen ersten Winkelteilungsbereich der Winkelteilung der Teilscheibe zur Erzeugung von Beugungsstrahlen; der positive Beugungsstrahl erster Ordnung wird mittels eines ersten Reflektors durch den ersten Winkelteilungsbereich, den ersten Spiegel und die erste Phasenplatte auf das polarisierende Teilerprisma zurückgeworfen und beaufschlagt über eine dritte Phasenplatte, einen Strahlenteiler und eine erste Polarisationsplatte einen ersten Photoempfänger. Der zweite Teilstrahl durchsetzt über eine zweite Phasenplatte und einen zweiten Spiegel einen zweiten Winkelteilungsbereich der Winkelteilung der Teilscheibe zur Erzeugung von Beugungsstrahlen; der negative Beugungsstrahl erster Ordnung wird mittels eines zweiten Reflektors durch den zweiten Winkelteilungsbereich, den zweiten Spiegel und die zweite Phasenplatte auf das polarisierende Teilerprisma zurückgeworfen und beaufschlagt über die dritte Phasenplatte, den Strahlenteiler und über eine zweite Polarisationsplatte einen zweiten Photoempfänger. Auch diese relativ aufwendige Winkelmeßeinrichtung benötigt einen höheren Montage- und Justageaufwand. Hinzu kommt, daß nur die Hälfte der Lichtintensität der Laserdiode die beiden Photoempfänger erreicht.

Der JP-A-61 065115 entnimmt man eine Winkelmeßeinrichtung zur Eliminierung des Exzentrizitätsfehlers der radialen Winkelteilung einer Teilscheibe, bei der ein von einer Lichtquelle ausgehender Lichtstrahl von einem ersten Winkelteilungsbereich in zwei Beugungsstrahlen einer Ordnung aufgeteilt wird und die vom ersten Winkelteilungsbereich unter bestimmten Beugungswinkeln ausgehenden beiden Beugungsstrahlen sich nach mehrmaliger Umlenkung mittels vierer Spiegel unter den gleichen Beugungswinkeln im diametral gegenüberliegenden zweiten Winkelteilungsbereich wieder vereinigen. Die Justierung dieser vier separaten raumorientierten Spiegel ist jedoch aufwendig.

In der US-A-3,756,723 ist eine gleichartige Winkelmeßeinrichtung angegeben, die eine Umlenkeinrichtung mit spiegeln, Prismen und einer elektrischen Justiereinrichtung aufweist.

Der Erfindung liegt die Aufgabe zugrunde, eine hochauflösende Winkelmeßeinrichtung kleiner Bauform der genannten Gattung mit einem einfacheren Aufbau anzugeben, bei der Exzentrizitätsfehler eliminiert werden, so daß eine hohe Meßgenauigkeit erzielbar ist.

Diese Aufgabe wird erfindungsgemäß durch die kennzeichnenden Merkmale der Ansprüche 1 bis 3 gelöst.

Die mit der Erfindung erzielten Vorteile bestehen insbesondere darin, daß sich durch die Reduzierung der optischen Elemente eine einfacher aufgebaute und damit preiswertere Winkelmeßeinrichtung geringer Abmessungen ergibt; gleichzeitig werden die Teilelagerhaltung vereinfacht und der Montage- und Justageaufwand herabgesetzt. Zudem treten zwischen der Lichtquelle und den Photoempfängern keine wesentlichen Intensitätsverluste der Lichtstrahlen auf. Exzentrizitätsfehler zwischen der Winkelteilung und der Drehachse des Teilungsträgers werden wirksam eliminiert und Taumelfehler des Teilungsträgers haben keinen Einfluß auf die Meßgenauigkeit.

Vorteilhafte Weiterbildungen der Erfindung entnimmt man den abhängigen Ansprüchen.

Ausführungsbeispiele der Erfindung werden anhand der Zeichnung näher erläutert.

Es zeigen

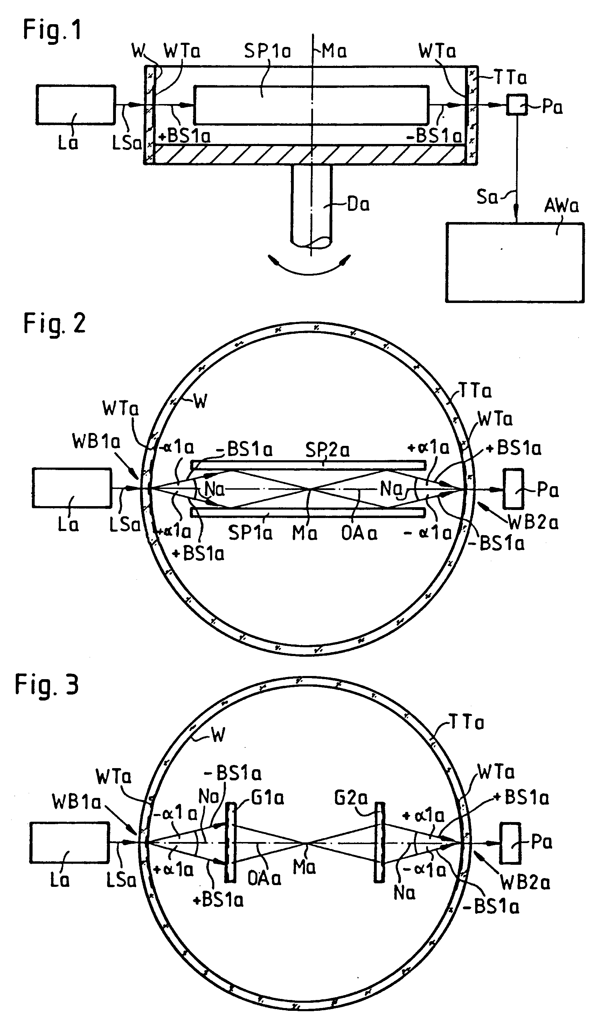

Figur 1    schematisch eine erste Winkelmeßeinrichtung in einer Seitenansicht und

| | |
|---|---|
| Figur 2 | in einer Draufsicht; |
| Figur 3 | eine Variante der ersten Winkelmeßeinrichtung nach Figur 2; |
| Figur 4 | schematisch eine zweite Winkelmeßeinrichtung in einer Seitenansicht und |
| Figur 5 | in einer Unteransicht; |
| Figur 6 | schematisch einen entfalteten Strahlengang für die zweite Winkelmeßeinrichtung; |
| Figur 7 | ein Umlenkprisma in einer Seitenansicht und |
| Figur 8 | in einem Querschnitt und |
| Figur 9 | einen weiteren entfalteten Strahlengang für die zweite Winkelmeßeinrichtung. |

In Figur 1 ist schematisch eine erste Winkelmeßeinrichtung in einer Seitenansicht und in Figur 2 in einer Draufsicht dargestellt. Ein um eine Drehachse Da drehbar gelagerter Teilungsträger TTa ist mit einem nicht gezeigten drehbaren Objekt verbunden. Der Teilungsträger TTa in Form einer Teilungstrommel besteht aus einem an der Drehachse Da befestigten transparenten Hohlzylinder, der auf der Innenwand W eine Winkelteilung WTa in Form eines Phasengitters aufweist. Diese Winkelteilung WTa wird von einer mit einem nicht gezeigten feststehenden Objekt verbundenen Abtasteinheit abgetastet, die eine Lichtquelle La in Form eines Lasers, zwei Spiegel SP1a, SP2a sowie ein Photoelement Pa aufweist. Ein vom Laser La ausgehender Lichtstrahl LSa durchsetzt in radialer Richtung einen ersten Winkelteilungsbereich WB1a der Winkelteilung WTa der Teilungstrommel TTa und wird von der als Phasengitter ausgebildeten Winkelteilung WTa des ersten Winkelteilungsbereichs WB1a in einen positiven Beugungsstrahl erster Ordnung +BS1a unter einem positiver Beugungwinkel +α1a und in einen negativen Beugungsstrahl erster Ordnung -BS1a unter einem negativen Beugungswinkel -α1a zur Normalen Na der Winkelteilung WTa aufgespalten; ein Beugungsstrahl nullter Ordnung tritt bei der als Phasengitter ausgebildeten Winkelteilung WTa duch Auslöschung nicht auf. In nicht dargestellter Weise mögen das drehbare Objekt durch eine Spindel und das feststehende Objekt durch das Bett einer Bearbeitungsmaschine gebildet sein.

Die beiden Spiegel SP1a, SP2a sind in radialer Richtung bezüglich der Teilungstrommel TTa sowie parallel zueinander und symmetrisch zur optischen Achse OAa des Stahlengangs in der Abtasteinheit befestigt. Die beiden unter den beiden zugehörigen Beugungswinkeln +α1a, -α1a vom ersten Winkelteilungsbereich WB1a ausgehenden Beugungsstrahlen +BS1a, -BS1a kreuzen sich nach einer ersten Umlenkung durch die beiden Spiegel SP1a, SP2a in der Mittellinie Ma der Drehachse Da der Teilungstrommel TTa und vereinigen sich wieder nach einer zweiten Umlenkung durch die beiden Spiegel SP1a, SP2a unter den beiden gleichen zugehörigen Beugungswinkeln +α1a, -α1a jeweils parallel zu sich selbst mit gleichläufigem Richtungssinn in einem zweiten Winkelteilungsbereich WB2a, der dem ersten Winkelteilungsbereich WB1a der Winkelteilung WTa diametral gegenüberliegt. Durch den zweiten Winkelteilungsbereich WB2a der Winkelteilung WTa werden die beiden Beugungsstrahlen erster Ordnung +BS1a, -BS1a zur Interferenz gebracht und fallen auf das Photoelement Pa, das ein periodisches Abtastsignal Sa bei der Abtastung der Winkelteilung WTa durch die Abtasteinheit liefert. In einer der Abtasteinheit nachgeschalteten Auswerteeinrichtung AWa werden aus dem periodischen Abtastsignal Sa des Photoelements Pa die Meßwerte für die Winkellage der beiden relativ zueinander drehbaren Objekte gewonnen.

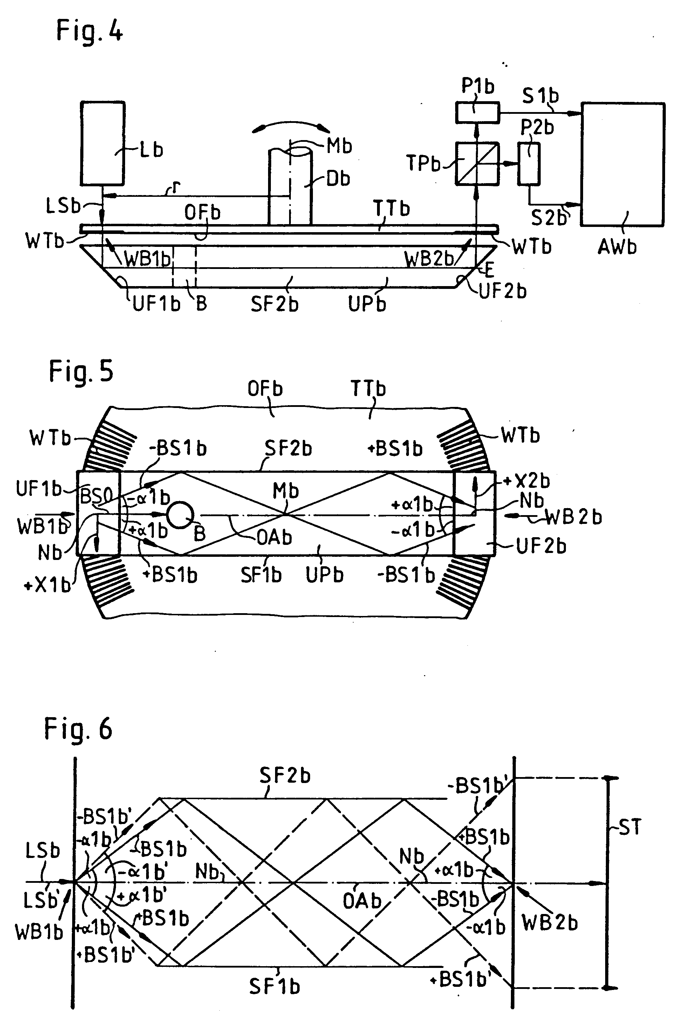

In Figur 3 ist eine Variante der ersten Winkelmeßeinrichtung nach Figur 2 gezeigt, bei der die beiden Spiegel SP1a, SP2a durch zwei Lineargitter G1a, G2a ersetzt sind; die übrigen Elemente sind mit denen der Figur 2 identisch und weisen daher auch die gleichen Bezugszeichen auf. Die beiden Lineargitter G1a, G2a sind senkrecht zur radialen Richtung bezüglich der Teilungstrommel TTa sowie parallel zueinander und symmetrisch zur optischen Achse OAa des Strahlengangs in der Abtasteinheit befestigt, so daß sich der gleiche Strahlengangverlauf wie in Figur 2 ergibt. Die Gitterkonstanten der beiden Lineargitter G1a, G2a hängen von ihrem gegenseitigen Abstand sowie vom gegenseitigen radialen Abstand der beiden Winkelteilungsbereiche WB1a, WB2a und von der Gitterkonstante der Winkelteilung WTa ab. Exzentrizitätsfehler zwischen der Winkelteilung WTa und der Drehachse Da der Teilungstrommel TTa werden wirksam eliminiert, wie es anhand der zweiten Winkelmeßeinrichtung nach den Figuren 4 und 5 nachfolgend erläutert wird.

In Figur 4 ist schematisch eine zweite Winkelmeßeinrichtung in einer Seitenansicht und in Figur 5 in einer Unteransicht dargestellt. Ein um eine Drehachse Db drehbar gelagerter Teilungsträger TTb ist mit einem nicht gezeigten drehbaren Objekt verbunden. Der Teilungsträger TTb in Form einer ebenen Teilungsscheibe besitzt auf einer Oberfläche OFb eine Winkelteilung WTb in Form eines Phasengitters. Diese Winkelteilung WTb wird von einer mit einem nicht gezeigten feststehenden Objekt verbundenen Abtasteinheit abgetastet, die eine Lichtquelle Lb in Form eines Lasers, ein in radialer Richtung bezüglich der Teilungsscheibe TTb angeordnetes Umlenkprisma UPb, ein polarisierendes Teilerprisma TPb sowie zwei Photoelemente P1b, P2b aufweist. Ein vom Laser Lb ausgehender linear polarisierter Lichtstrahl LSb durchsetzt senkrecht zur Teilungsscheibe TTb einen ersten Winkelteilungsbereich WB1b der Winkelteilung WTb der Teilungsscheibe TTb und wird von der als Phasengitter ausgebildeten Winkelteilung WTb des ersten Winkelteilungsbereiches WB1b in einen positiven Beugungsstrahl erster Ordnung +BS1b unter einem positiven Beugungswinkel +$\alpha$1b und in einen negativen Beugungsstrahl erster Ordnung -BS1b unter einem negativen Beugungswinkel -$\alpha$1b zur Normalen Nb der Winkelteilung WTb aufgespalten; ein Beugungsstrahl nullter Ordnung tritt bei der als Phasengitter ausgebildeten Winkelteilung WTb durch Auslöschung nicht auf. In nicht dargestellter Weise mögen das drehbare Objekt durch eine Spindel und das feststehende Objekt durch das Bett einer Bearbeitungsmaschine gebildet sein.

Die beiden unter den beiden zugehörigen Beugungswinkeln +$\alpha$1b, -$\alpha$1b vom ersten Winkelteilungsbereich WB1b ausgehenden Beugungsstrahlen erster Ordnung +BS1b, -BS1b werden von einer ersten Umlenkfläche UF1b des Umlenkprismas UPb in eine Ebene E parallel zur Teilungsscheibe TTb in Richtung ihrer Drehachse Db umgelenkt, kreuzen sich in der Ebene E nach einer ersten Umlenkung durch Totalreflexion an den beiden symmetrisch zur optischen Achse OAb des Strahlengangs verlaufenden Seitenflächen SF1b, SF2b des Umlenkprismas UPb in der Mittellinie Mb der Drehachse Db der Teilungsscheibe TTb, werden nach einer zweiten Umlenkung durch Totalreflexion an diesen beiden Seitenflächen SF1b, SF2b von einer zweiten Umlenkfläche UF2b des Umlenkprismas UPb senkrecht zur Teilungsscheibe TTb umgelenkt und vereinigen sich wieder unter den beiden gleichen zugehörigen Beugungswinkeln +$\alpha$1b, -$\alpha$1b in einem zweiten Winktelteilungsbereich WB2b, der dem ersten Winkelteilungsbereich WB1b der Winkelteilung WTb diametral gegenüberliegt; die beiden im ersten Winkelteilungsbereich WB1b erzeugten beiden Beugungsstrahlen erster Ordnung +BS1b, -BS1b treffen jeweils parallel zu sich selbst mit gegenläufigem Richtungssinn im zweiten Winkelteilungsbereich WB2b auf. Bei der zweimaligen Umlenkung im Umlenkprisma UPb erfahren die beiden Beugungsstrahlen erster Ordnung +BS1b, -BS1b eine elliptische Polarisation.

Durch den zweiten Winkelteilungsbereich WB2b der Winkelteilung WTb werden die beiden Beugungsstrahlen erster Ordnung +BS1b, -BS1b zur Interferenz gebracht, durchsetzen anschließend das polarisierende Teilerprisma TPb und fallen auf die beiden Photoelemente P1b, P2b, die zwei um 90$^°$ gegeneinander phasenversetzte periodische Abtastsignale S1b, S2b bei der Abtastung der Winkelteilung WTb durch die Abtasteinheit Ab liefern.

In einer der Abtasteinheit nachgeschalteten Auswerteeinrichtung AWb werden aus diesen beiden periodischen Abtastsignalen S1b, S2b der beiden Photoelemente P1b, P2b die Meßrichtung (Drehsinn der Teilscheibe TTb) sowie die Meßwerte für die Winkellage der beiden relativ zueinander drehbaren Objekte gewonnen.

Durch die zweimalige Umlenkung der beiden Beugungsstrahlen erster Ordnung +BS1b, -BS1b an den beiden Seitenflächen SF1b, SF2b des Umlenkprismas UPb ergibt sich nun, daß durch die gegenläufige Bewegung der beiden Winkelteilungsbereiche WB1b, WB2b bei der Drehung der Teilungsscheibe TTb eine Modulation der Intensität der beiden periodischen Abtastsignale S1b, S2b auftritt, die die doppelte Frequenz der Summe der Tangentialbewegungen x1b, x2b der beiden Winkelteilungsbereiche WB1b, WB2b aufweist und die Gewinnung der Meßwerte für die beiden relativ zueinander drehbaren Objekte erlaubt.

Diese Modulation der Intensität der beiden Abtastsignale S1b, S2b kann durch die Formel

$$I = I_o + 2A^2 \text{ as } (4\pi(x1b + x2b)/g)$$

dargestellt werden. Dabei bedeuten A die maximalen Amplituden der beiden periodischen Abtastsignale S1b, S2b, g die Gitterkonstante der beiden Winkelteilungsbereiche WB1b, WB2b der Winkelteilung WTb und Io einen konstanten Faktor.

Besteht nun zwischen der Winkelteilung WTb und der Drehachse Db der Teilungsscheibe TTb eine Exzentrizität e, so ergibt sich neben der gegenläufigen Bewegung der beiden Winkelteilungsbereiche WB1b, WB2b auch eine gleichsinnige Bewegung der beiden Winkelteilungsbereiche WB1b, WB2b. Durch die zweimalige Umlenkung der beiden Beugungsstrahlen erster Ordnung +BS1b, -BS1b tritt jedoch bei der gleichsinnigen Bewegung der beiden Winkelteilungsbereiche WB1b, WB2b der Winkelteilung WTb keine Modulation der Intensität der beiden Abtastsignale S1b, S2b auf, da für diesen Fall x1b =-x2b gemäß den in Figur 5 angegebenen Vorzeichen für x1b, x2b gilt und sich somit aus der obigen Formel der konstante Wert I = Io + 2A$^2$ ergibt, der keinen Einfluß auf die aus den beiden periodischen Abtastsignalen S1b, S2b gewonnenen Meßwerte hat, so daß eine vorhandene Exzentrizität e zwischen der Winkelteilung WTb und der Drehachse Db der Teilungsscheibe TTb auf optischem Weg eliminiert wird.

Bei Verwendung eines Amplitudengitters anstelle eines Phasengitters für die Winkelteilung WTb erhält man auch einen Beugungsstrahl nullter Ordnung BSO; dieser kann jedoch durch eine Bohrung B im Umlenkprisma UPb vorzugsweise im ersten Umlenkbereich der beiden Beugungsstrahlen erster Ordnung +BS1b, -BS1b gemäß Figur 5 ausgeblendet werden.

Da es sich bei der Winkelteilung WTb um ein Radialgitter handelt, dessen Gitterkonstante g vom Radius r abhängt, sind die beiden Beugungswinkel $+\alpha 1b$, $-\alpha 1b$ der beiden Beugungsstrahlen erster Ordnung $+BS1b$, $-BS1b$ ebenfalls vom Radius r abhängig.

In Figur 6 ist ein entfalteter Strahlengang für die zweite Winkelmeßeinrichtung schematisch gezeigt. Der vom Laser Lb im Abstand r von der Drehachse Db der Teilungsscheibe TTb ausgehende Lichtstrahl LSb wird im ersten Winkelteilungsbereich WB1b in die beiden Beugungsstrahlen erster Ordnung $+BS1b$, $-BS1b$ unter den beiden Beugungswinkeln $+\alpha 1b$, $-\alpha 1b$ aufgespalten, die sich nach zweimaliger Umlenkung durch Totalreflexion an den beiden Seitenflächen SF1b, SF2b des Umlenkprismas UPb wieder im zweiten Winkelteilungsbereich WB2b der Winkelteilung WTb unter den beiden gleichen Beugungswinkeln $+\alpha 1b$, $-\alpha 1b$ vereinigen. Der vom Laser Lb im Abstand r'< r von der Drehachse Db der Teilungsscheibe TTb ausgehende Lichtstrahl LSb' wird im ersten Winkelteilungsbereich WB1b in zwei Beugungsstrahlen erster Ordnung $+BS1b'$, $-BS1b'$ unter den beiden Beugungswinkeln $+\alpha 1b'$, $-\alpha 1b'$ zur Normalen Nb aufgespalten. Da die Gitterkonstante g' der Winkelteilung WTb im ersten Winkelteilungsbereich WB1b an der Stelle des Lichtstrahls LSb' kleiner als die Gitterkonstante g der Winkelteilung WTb im ersten Winkelteilungsbereich WB1b an der Stelle des Lichtstrahls LSb ist, sind die beiden Beugungswinkel $+\alpha 1b'$, $-\alpha 1b'$ der beiden Beugungsstrahlen erster Ordnung $+BS1b'$, $-BS1b'$ größer als die beiden Beugungswinkel $+\alpha 1b$, $-\alpha 1b$ der beiden Beugungsstrahlen erster Ordnung $+BS1b$, $-BS1b$; die beiden Beugungsstrahlen erster Ordnung $+BS1b'$, $-BS1b'$ vereinigen sich daher nach zweimaliger Umlenkung an den beiden Seitenflächen SF1b, SF2b des Umlenkprismas UPb nicht im zweiten Winkelteilungsbereich WB2b, sondern weisen im zweiten Winkelteilungsbereich WB2b eine Scherung ST auf (gestrichelter Strahlenverlauf).

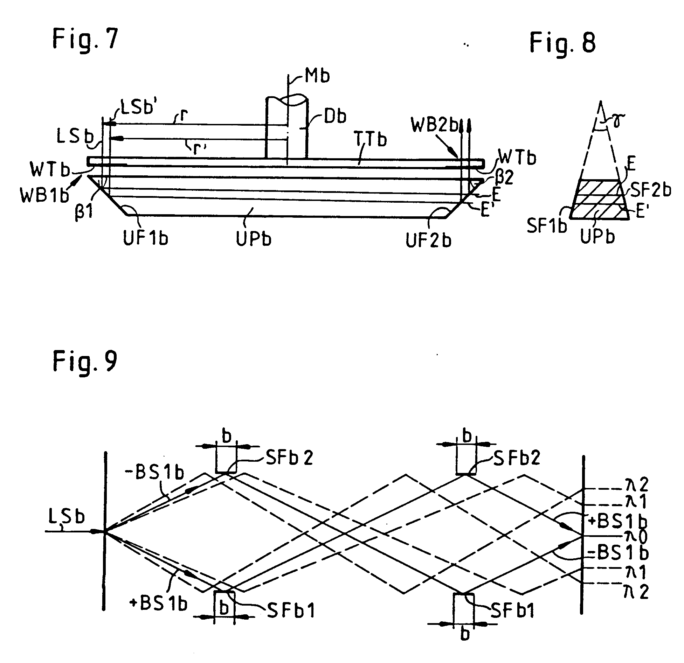

Diese Scherung ST der beiden Beugungsstrahlen erster Ordnung $+BS1b'$, $-BS1b'$ kann dadurch beseitigt werden, daß die beiden Seitenflächen SF1b, SF2b des Umlenkprismas UPb nicht parallel sind, sondern einen Keilwinkel $\gamma$ aufweisen. In Figur 7 ist das Umlenkprisma UPb in einer Seitenansicht und in Figur 8 in einem Querschnitt mit dem Keilwinkel $\gamma$ dargestellt. Durch den Keilwinkel $\gamma$ besitzt das Umlenkprisma UPb in der Ebene E' für die beiden Beugungsstrahlen erster Ordnung $+BS1b'$, $-BS1b'$ eine größere Breite als in der Ebene E für die beiden Beugungsstrahlen erster Ordnung $+BS1b$, $-BS1b$, so daß sich die Beugungsstrahlen erster Ordnung $+BS1b'$, $-BS1b'$ ebenfalls im zweiten Winkelteilungsbereich WB2b vereinigen.

Durch den Keilwinkel $\gamma$ des Umlenkprismas UPb liegen die Ebene E für die beiden Beugungsstrahlen erster Ordnung $+BS1b$, $-BS1b$ sowie die Ebene E' für die beiden Beugungsstrahlen erster Ordnung $+BS1b'$, $-BS1b'$ nicht mehr parallel zur Teilungsscheibe TTb, so daß die Beugungsstrahlen erster Ordnung $+BS1b$, $-BS1b$ und die Beugungsstrahlen erster Ordnung $+BS1b'$, $-BS1b'$ nicht mehr senkrecht zur Teilungsscheibe TTb von der zweiten Umlenkfläche UF2b des Umlenkprismas UPb umgelenkt werden. Dieser Umlenkfehler kann dadurch beseitigt werden, daß die zweite Umlenkfläche UF2b des Umlenkprismas UPb einen zweiten Umlenkwinkel $\beta 2 < 45^\circ$ und die erste Umlenkfläche UF1b des Umlenkprismas UPb einen ersten Umlenkwinkel $\beta 1 = 45^\circ$ aufweisen. In nicht gezeigter Weise können auch beide Umlenkwinkel $\beta 1, \beta 2 \neq 45^\circ$ sein.

Die Aufspaltung des Lichtstrahls LSb in die beiden Beugungsstrahlen erster Ordnung $+BS1b$, $-BS1b$ im ersten Winkelteilungsbereich WB1b und die Vereinigung der beiden Beugungsstrahlen erster Ordnung $+BS1b$, $-BS1b$ im zweiten Winkelteilungsbereich WB2b sind von der Wellenlänge $\lambda$ des Lichtstrahls LSb abhängig. Die geometrische Anordnung der Elemente der zweiten Winkelmeßeinrichtung ist nur für eine bestimmte Wellenlänge $\lambda$ richtig. Wenn der Lichtstrahl LSb eine große spektrale Bandbreite aufweist, muß eine Wellenlängenfilterung vorgenommen werden. Figur 9 zeigt zu diesem Zweck einen weiteren entfalteten Strahlengang für die zweite Winkelmeßeinrichtung, bei der die beiden Beugungsstrahlen erster Ordnung $+BS1b$, $-BS1b$ mit der Wellenlänge $\lambda 0$ sowie weitere Beugungsstrahlen erster Ordnung mit den Wellenlängen $\lambda 1$, $\lambda 2$ dargestellt. Die Auswahl der beiden Beugungsstrahlen erster Ordnung $+BS1b$, $-BS1b$ mit der Wellenlänge $\lambda 0$ und die Ausfilterung der weiteren Beugungsstrahlen erster Ordnung mit den Wellenlängen $\lambda 1, \lambda 2$ erfolgt dadurch, daß die Umlenkung der Beugungsstrahlen erster Ordnung $+BS1b$, $-BS1b$ nur im Bereich der beiden Beugungsstrahlen erster Ordnung $+BS1b$, $-BS1b$ möglich ist, indem das Umlenkprisma UPb nur in diesen beiden Umlenkbereichen eine Breite b aufweist.

Die Erfindung ist bei lichtelektrischen Winkelmeßeinrichtungen sowohl im Durchlicht als auch im Auflicht einsetzbar.

**Patentansprüche**

1.  Lichtelektrische Winkelmeßeinrichtung zur Messung der Winkellage zweier relativ zueinander drehbarer Objekte, bei der eine Winkelteilung (WTb) eines mit dem einen Objekt verbundenen Teilungsträgers (TTb) an zwei diametral gegenüberliegenden Winkelteilungsbereichen (WB1b, WB2b) von einer mit dem anderen Objekt verbundenen Abtasteinheit mittels Lichtstrahlenbeugung abgetastet wird und bei der ein von einer Lichtquelle (Lb) ausgehender Lichtstrahl (LSb) vom ersten Winkelteilungsbereich (WB1b) in zwei Beugungsstrahlen (+BS1b, -BS1b) einer Ordnung aufgeteilt wird und die vom ersten Winkelteilungsbereich (WB1b) unter den Beugungswinkeln (+α1b, -α1b) ausgehenden beiden Beugungsstrahlen (+BS1b, -BS1b) sich nach mehrmaliger Umlenkung unter den gleichen Beugungswinkeln (+α1b, -α1b) im diametral gegenüberliegenden zweiten Winkelteilungsbereich (WB2b) wieder vereinigen, dadurch gekennzeichnet, daß zur mehrmaligen Umlenkung der beiden Beugungsstrahlen (+BS1b, -BS1b) ein radial zum Teilungsträger (TTb) verlaufendes Umlenkprisma (UPb) in der Abtasteinheit befestigt ist und daß die beiden Beugungsstrahlen (+BS1b, -BS1b) von zwei Umlenkflächen (UF1b, UF2b) sowie durch Totalreflexion an den beiden symmetrisch zur optischen Achse (OAb) des Strahlengangs verlaufenden Seitenflächen (SF1b, SF2b) des Umlenkprisma (UPb) umgelenkt werden.

2. Lichtelektrische Winkelmeßeinrichtung zur Messung der Winkellage zweier relativ zueinander drehbarer Objekte, bei der eine Winkelteilung (WTa) eines mit dem einen Objekt verbundenen Teilungsträgers (TTa) an zwei diametral gegenüberliegenden Winkelteilungsbereichen (WB1a, WB2a) von einer mit dem anderen Objekt verbundenen Abtasteinheit mittels Lichtstrahlenbeugung abgetastet wird und bei der ein von einer Lichtquelle (La) ausgehender Lichtstrahl (LSa) vom ersten Winkelteilungsbereich (WB1a) in zwei Beugungsstrahlen (+BS1a, -BS1a) einer Ordnung aufgeteilt wird und die vom ersten Winkelteilungsbereich (WB1a) unter den Beugungswinkeln (α1a, -α1a) ausgehenden beiden Beugungsstrahlen (+BS1a, -BS1a) sich nach mehrmaliger Umlenkung unter den gleichen Beugungswinkeln (+α1a, -α1a) im diametral gegenüberliegenden zweiten Winkelteilungsbereich (WB2a) wieder vereinigen, dadurch gekennzeichnet, daß zur zweimaligen Umlenkung der beiden Beugungsstrahlen (+BS1a, -BS1a) zwei Linearteilungen (G1a, G2a) senkrecht zur radialen Richtung bezüglich des Teilungsträgers (TTa) sowie parallel zueinander und symmetrisch zur optischen Achse (OAa) des Strahlengangs in der Abtasteinheit befestigt sind.

3. Lichtelektrische Winkelmeßeinrichtung zur Messung der Winkellage zweier relativ zueinander drehbarer Objekte, bei der eine Winkelteilung (WTa) eines mit dem einen Objekt verbundenen Teilungsträgers (TTa) an zwei diametral gegenüberliegenden Winkelteilungsbereichen (WB1a, WB2a) von einer mit dem anderen Objekt verbundenen Abtasteinheit mittels Lichtstrahlenbeugung abgetastet wird und bei der ein von einer Lichtquelle (La) ausgehender Lichtstrahl (LSa) vom ersten Winkelteilungsbereich (WB1a) in zwei Beugungsstrahlen (+BS1a, -BS1a) einer Ordnung aufgeteilt wird und die vom ersten Winkelteilungsbereich (WB1a) unter den Beugungswinkeln (+α1a, -α1a) ausgehenden beiden Beugungsstrahlen (+BS1a, -BS1a) sich nach mehrmaliger Umlenkung unter den gleichen Beugungswinkeln (+α1a, -α1a) im diametral gegenüberliegenden zweiten Winkelteilungsbereich (WB2a) wieder vereinigen, dadurch gekennzeichnet, daß der drehbar gelagerte Teilungsträger (TTa) aus einer Teilungstrommel mit axialer Winkelteilung (WTa) besteht und daß zur zweimaligen Umlenkung der beiden Beugungsstrahlen (+BS1a, -BS1a) zwei Spiegel (SP1a, SP2a) in radialer Richtung bezüglich des Teilungsträgers (TTa) sowie parallel zueinander und symmetrisch zur optischen Achse (OAa) des Strahlengangs in der Abtasteinheit befestigt sind.

4. Meßeinrichtung nach Anspruch 1, dadurch gekennzeichnet, daß die beiden Seitenflächen (SF1b, SF2b) des Umlenkprismas (UPb) im Querschnitt einen Keilwinkel γ einschließen.

5. Meßeinrichtung nach Anspruch 1, dadurch gekennzeichnet, daß die Umlenkflächen (UF1b, UF2b) des Umlenkprismas (UPb) wenigstens einen Umlenkwinkel β1, β2<45° aufweisen.

6. Meßeinrichtung nach Anspruch 1, dadurch gekennzeichnet, daß die Seitenflächen (SF1b, SF2b) des Umlenkprismas (UPb) zwei Umlenkbereiche der Breite b aufweisen.

7. Meßeinrichtung nach Anspruch 4, dadurch gekennzeichnet, daß das Umlenkprisma (UPb) im ersten Umlenkbereich eine Bohrung (B) aufweist.

8. Meßeinrichtung nach Anspruch 1, dadurch gekennzeichnet, daß die Winkelteilung (WT) durch ein Phasengitter gebildet ist.

## Claims

1. Photoelectric angle measuring device for measuring the angular position of two objects rotatable relative to one another, in which an angular graduation (WTb) of a graduation carrier (TTb) connected to the one object is sensed at two diametrically opposite angular graduation regions (WB1b, WB2b) by a sensing unit connected to the other object, by means of light ray diffraction and in which a light beam (LSb) emitted by a light source ((Lb) is split by the first angular graduation region (WB1b) into two diffracted beams (+BS1b, -BS1b) of one order and the two diffracted beams (+BS1b, -BS1b) emerging from the first angular graduation region at the angles of diffraction (+$\alpha$1b, -$\alpha$1b) recombine at the same angles of diffraction (+$\alpha$1b, -$\alpha$1b) in the diametrically opposite second angular diffraction region (WB2b) after multiple deflections, characterized in that a deflecting prism (UPb) running radially relative to the graduation carrier (TTb) is fixed in the sensing unit for the multiple deflections of the two diffracted beams (+BS1b, -BS1b) and in that the two diffracted beams (+BS1b, -BS1b) are deflected at two deflecting surfaces (UF1b, UF2b) as well as by total reflection at the two side surfaces (SF1b, SF2b) of the deflecting prism (UPb) running symmetrically relative to the optical axis (OAb) of the beam path.

2. Photoelectric angle measuring device for measuring the angular position of two objects rotatable relative to one another, in which an angular graduation (WTa) of a graduation carrier (TTa) connected to the one object is sensed at two diametrically opposite angular graduation regions (WB1a, WB2a) by a sensing unit connected to the other object, by means of light ray diffraction and in which a light beam (LSa) emitted by a light source ((La) is split by the first angular graduation region (WB1a) into two diffracted beams (+BS1a, -BS1a) of one order and the two diffracted beams (+BS1a, -BS1a) emerging from the first angular graduation region at the angles of diffraction (+$\alpha$1a, -$\alpha$1a) recombine at the same angles of diffraction (+$\alpha$1a, -$\alpha$1a) in the diametrically opposite second angular diffraction region (WB2a) after multiple deflections, characterized in that two linear graduations (G1a, G2a) are fixed in the sensing unit for the double deflection of the two diffracted beams (+BS1a, -BS1a), disposed perpendicular to the radial direction relative to the graduation carrier (TTa) as well as parallel to one another and symmetrical with respect to the optical axis (OAa) of the beam path.

3. Photoelectric angle measuring device for measuring the angular position of two objects rotatable relative to one another, in which an angular graduation (WTa) of a graduation carrier (TTa) connected to the one object is sensed at two diametrically opposite angular graduation regions (WB1a, WB2a) by a sensing unit connected to the other object, by means of light ray diffraction and in which a light beam (LSa) emitted by a light source ((La) is split by the first angular graduation region (WB1a) into two diffracted beams (+BS1a, -BS1a) of one order and the two diffracted beams (+BS1a, -BS1a) emerging from the first angular graduation region at the angles of diffraction (+$\alpha$1a, -$\alpha$1a) recombine at the same angles of diffraction (+$\alpha$1a, -$\alpha$1a) in the diametrically opposite second angular diffraction region (WB2a) after multiple deflections, characterized in that the rotatably mounted graduation carrier (TTa) consists of an graduated drum with axial angular graduation (WTa) and in that two mirrors (SP1a, SP2a) are fixed in the sensing unit for the double deflection of the two diffracted beams (+BS1a, -BS1a), disposed in the radial direction with respect to the graduation carrier (TTa) as well as parallel to one another and symmetrical with respect to the optical axis (OAa) of the beam path.

4. Measuring device according to claim 1, characterized in that the two side surfaces (SF1b, SF2b) of the deflecting prism (UPb) include a wedge angle $\gamma$ in cross-section.

5. Measuring device according to claim 1, characterized in that the deflecting surfaces (UF1b, UF2b) of the deflecting prism (UPb) have at least a deflecting angle $\beta$1, $\beta$2 <45$^\circ$.

6. Measuring device according to claim 1, characterized in that the side surfaces (SF1b, SF2b) of the deflecting prism (UPb) have two deflecting regions of the width b.

7. Measuring device according to claim 4, characterized in that the deflecting prism (UPb) has a bore (B) in the first deflecting region.

8. Measuring device according to claim 1, characterized in that the angular graduation (WT) is formed by a phase grating.

**Revendications**

1. Dispositif de mesure d'angles photo-électrique pour la mesure de la position angulaire de deux objets pouvant tourner l'un par rapport à l'autre, dans lequel une graduation angulaire (WTb) d'un support de graduation (TTb) lié à l'un des objets est lue par diffraction des rayons lumineux en deux zones de graduation angulaire (WB1b, WB2b) diamétralement opposées par une unité de lecture liée à l'autre objet et dans lequel un rayon lumineux (LSb) provenant d'une source lumineuse (Lb) est séparé en deux rayons diffractés (+BS1b, -BS1b) d'ordre de diffraction donné par la première zone de graduation angulaire (WB1b), et les deux rayons diffractés (+BS1b, -BS1b) quittant la première zone de graduation angulaire (WB1b) avec les angles de diffraction ($+\alpha$1b, $-\alpha$1b) se réunissent, après plusieurs déviations avec les mêmes angles de diffraction ($+\alpha$1b, $-\alpha$1b), dans la deuxième zone de graduation angulaire (WB2b) diamétralement opposée, caractérisé en ce que, pour la déviation répétée des deux rayons diffractés (+BS1b, -BS1b), un prisme de déviation (UPb), disposé radialement par rapport au support de graduation (TTb), est fixé à l'intérieur de l'unité de lecture, et en ce que les deux rayons diffractés (+BS1b, - BS1b) sont déviés par deux surfaces de déviation (UF1b, UF2b) ainsi que par réflexion totale sur deux faces latérales (SF1b, SF2b) du prisme de déviation (UPb), symétriques par rapport à l'axe optique (OAb) du trajet des rayons.

2.  Dispositif de mesure d'angles photo-électrique pour la mesure de la position angulaire de deux objets pouvant tourner l'un par rapport à l'autre, dans lequel une graduation angulaire (WTa) d'un support de graduation (TTa) lié à l'un des objets est lue par diffraction des rayons lumineux en deux zones de graduation angulaire (WB1a, WB2a) diamétralement opposées par une unité de lecture liée à l'autre objet et dans lequel un rayon lumineux (LSa) provenant d'une source lumineuse (La) est séparé en deux rayons diffractés (+BS1a, - BS1a) d'ordre de diffraction donné par la première zone de graduation angulaire (WB1a), et les deux rayons diffractés (+BS1a, -BS1a) quittant la première zone de graduation angulaire (WB1a) avec les angles de diffraction ($+\alpha$1a, $-\alpha$1a) se réunissent, après plusieurs déviations avec les mêmes angles de diffraction ($+\alpha$1a, $-\alpha$1a), dans la deuxième zone de graduation angulaire (WB2a) diamétralement opposée, caractérisé en ce que, pour la déviation à deux reprises des deux rayons diffractés (+BS1a, -BS1a) deux graduations linéaires (G1a, G2a) sont fixées dans l'unité de lecture perpendiculairement à la direction radiale par rapport au support de graduation (TTa), parallèles entre elles et symétriquement par rapport à l'axe optique (OAa) du trajet des rayons.

3.  Dispositif de mesure d'angles photo-électrique pour la mesure de la position angulaire de deux objets pouvant tourner l'un par rapport à l'autre, dans lequel une graduation angulaire (WTa) d'un support de graduation (TTa) lié à l'un des objets est lue par diffraction des rayons lumineux en deux zones de graduation angulaire (WB1a, WB2a) diamétralement opposées par une unité de lecture liée à l'autre objet et dans lequel un rayon lumineux (LSa) provenant d'une source lumineuse (La) est séparé en deux rayons diffractés (+BS1a, - BS1a) d'ordre de diffraction donné par la première zone de graduation angulaire (WB1a), et les deux rayons diffractés (+BS1a, -BS1a) quittant la première zone de graduation angulaire (WB1a) avec les angles de diffraction ($+\alpha$1a, $-\alpha$1a) se réunissent, après plusieurs déviations avec les mêmes angles de diffraction ($+\alpha$1a, $-\alpha$1a), dans la deuxième zone de graduation angulaire (WB2a) diamétralement opposée, caractérisé en ce que le support de graduation (TTa) monté mobile en rotation est formé par un tambour gradué portant une graduation angulaire (WTa) axiale et en ce que, pour la déviation à deux reprises des deux rayons diffractés (+BS1a, -BS1a), deux miroirs (SP1a, SP2a) sont fixés à l'intérieur de l'unité de lecture dans la direction radiale par rapport au support de graduation (TTa), parallèles entre eux et symétriquement par rapport à l'axe optique (OAa) du trajet des rayons.

4.  Dispositif de mesure d'angles selon la revendication 1 caractérisé en ce que les deux faces latérales (SF1b, SF2b) du prisme de déviation (UPb), en section transversale, forment un angle $\gamma$.

5.  Dispositif de mesure d'angles selon la revendication 1 caractérisé en ce que les surfaces de déviation (UF1b, UF2b) du prisme de déviation (UPb) présentent au moins un angle de déviation $\beta$1, $\beta$2 < 45$^\circ$.

6.  Dispositif de mesure d'angles selon la revendication 1 caractérisé en ce que les faces latérales (SF1b, SF2b) du prisme de déviation (UPb) présentent deux zones de déviation de largeur b.

7.  Dispositif de mesure d'angles selon la revendication 4 caractérisé en ce que le prisme de déviation (UPb) présente un perçage (B) dans la première zone de déviation.

8.  Dispositif de mesure d'angles selon la revendication 1 caractérisé en ce que la graduation angulaire (WT) est formé par un réseau de phase.

EP 0 262 349 B1

Fig.1

Fig. 2

Fig. 3

**Fig. 4**

**Fig. 5**

**Fig. 6**

Fig. 7

Fig. 8

Fig. 9